# EUROPEAN PATENT SPECIFICATION

(11) **EP 1 593 100 B1**
(45) Date of publication and mention of the grant of the patent: **15.08.2007**
(21) Application number: 03799521.4
(22) Date of filing: 19.12.2003
(51) Int. Cl.: G07F 19/00, H04L 9/00, G07F 7/00

(54) **METHOD FOR ENSURING PRIVACY IN ELECTRONIC TRANSACTIONS WITH SESSION KEY BLOCKS**
VERFAHREN ZUM SICHERSTELLEN VON ANONYMITÄT IN EINER ELEKTRONISCHEN TRANSAKTION MITTELS SITZUNGSSCHLÜSSELBLÖCKEN
PROCEDE PERMETTANT DE GARANTIR LA CONFIDENTIALITE DANS DES TRANSACTIONS ELECTRONIQUES A L'AIDE DE BLOCS DE CLES DE SESSION

(30) Priority: 31.12.2002 US 335433
(43) Date of publication of application: 09.11.2005
(73) Proprietor: International Business Machines Corporation, Armonk, NY 10504 (US); Compagnie IBM France, 92400 Courbevoie (FR)
(72) Inventor: LOTSPIECH, Jeffrey, B., Henderson, NV 89052 (US); SRINIVASAN, Savitha, San Jose, CA 95120 (US); SIGFREDO, Nin, I., Morgan Hill, CA 95037 (US); DALIT, Naor, Tel-Aviv 69018 (US); RAM, Reddy, North Wales, PA 19454 (US); BLAKELEY, Burnette, D., Cary, NC 27513-3529 (US)
(74) Representative: Zerbi, Guido Maria
(86) International application number: PCT/EP2003/015040
(87) International publication number: WO 2004/059588

(56) References cited:
- WO-A-00/01108
- US-A- 6 061 789
- US-A1- 2001 056 487
- US-A1- 2002 022 967
- US-A1- 2002 077 885
- US-A1- 2002 146 132
- GOLDBERG I ET AL: "FREEDOM NETWORK 1.0 ARCHITECTURE AND PROTOCOLS" WHITE PAPER, XX, XX, 29 November 1999 (1999-11-29), pages 1-23, XP002939044

## Description

### Field of the Invention

This invention relates to conducting electronic transactions with a potentially untrusted server and more specifically to maintaining user anonymity and transaction privacy while allowing the server to verify the user is a valid subscriber entitled to participate in the transaction.

### Cross-Reference to Related Applications

This invention is related to nine commonly-owned pending U.S. patent applications, including:
- U.S. Ser. No. 09/770,877, filed January 26, 2001, entitled "Method for Broadcast Encryption and Key Revocation of Stateless Receivers".
- U.S. Ser. No. 09/771,239, filed January 26, 2001, entitled "Method for Tracing Traitor Receivers in a Broadcast Encryption System".
- U.S. Ser. No. 09/777,506, filed February 5, 2001, entitled "Method for Assigning Encryption Keys".
- U.S. Ser. No. 09/789,451, filed February 20, 2001, entitled "Method for Assigning Encryption Keys".
- U.S. Ser. No. 10/042,652, filed January 8, 2002, entitled "Method for Ensuring Content Protection and Subscription Compliance".
- U.S. Ser. No. 09/358,162, filed July 20, 1999, entitled "Content Guard System for Copy Protection of Recordable Media".
- U.S. Ser. No. 09/575,740, filed May 22, 2000, entitled "Coincidence-Free Media Key Block for Content Protection for Recordable Media".
- U.S. Ser. No. 09/597,600, filed April 24, 1998, entitled "System for Encrypting Broadcast Programs in the Presence of Compromised Receiver Devices".
- U.S. Ser. No. 09/564,658, filed May 3, 2000, entitled "Forensic Media Key Blocks for Identifying Compromised Keys".

### Background of the Invention

Privacy concerns are growing with the growth of the Internet. Unfortunately, assurance rather than enforcement is currently the norm. Service providers often provide complex legal agreements to define their obligations to maintain client privacy. However, as a practical matter, many customers remain skeptical because of the expenses involved in litigation and the difficulties in definitively proving which service provider leaked what client information. Commercial organizations know the value of customer information and are engaged in its rampant exploitation. Consumers are already loudly complaining about unwanted "junk mail", telemarketing phone calls, and e-mails (often termed "spam") that are often a consequence of information leakage, but no effective solution to such annoyances exists. As electronic commerce continues to advance into the business-to-business ("B2B") arena, the issue of privacy will become even more critical and costly.

A more particular aspect of the "privacy problem" concerns the desire of clients to prove their memberships in a group while maintaining some degree of anonymity to protect their privacy during electronic interactions. Protecting client identity is one aspect of preserving privacy; protecting transaction content is another. Is there anyway for a client to remain anonymous, especially if the server is demanding payment for its service? After all, the server has a legitimate interest to make sure that only paying subscribers can use its services. Is there a way for the server to know that the given request is from a valid subscriber, without possibly having any idea which particular subscriber is making the request?

Standard cryptographic techniques such as SSL and HTTPS protocols are effective in keeping eavesdroppers from observing private information as it flows between a client and the server. But what if the client does not trust the server? What if the server (legally or not) reports a client's requests or interests to a third party? In the pharmaceutical industry, for example, the particular diseases a company is researching can comprise its most sensitive corporate information. Similarly, in the financial services industry, the knowledge that a particular client (such as a major mutual fund company) is heavily researching a particular stock can be very valuable per se. In many such cases, the client may insist on remaining anonymous while being authenticated as a valid user of various services being provided. Secure Internet protocols such as SSL and HTTPS provide no way for the server to guarantee the client is a valid subscriber, unless the requests are combined with userid/password data, which tends to void any client anonymity.

This "anonymous authentication" problem has been known for a long time, and there have been some attempts to solve it. One popular approach is to use public key cryptography and provide the subscribing clients with "anonymous credentials". These credentials then must be presented with each service request. This solution has a major potential weakness, though, because all convenient ways for the customer to pay for the credentials require him to identify himself, for example, by providing a credit card. How can he trust that the server is not associating his so-called anonymous credentials with his true identity? To be effective, such solutions must be associated with some "anonymous payment" idea, such as electronic cash. However, electronic cash solutions have not been popular so far in the marketplace. Customers generally want to continue using conventional means (e.g. credit cards) for payments.

Another technique for anonymous authentication involves "blinded signatures", which were originally invented by David Chaum for use in anonymous electronic cash. In this case the customer and the server engage in an authentication protocol to establish identity, during which the server digitally signs a blinded piece of information that can then be unblinded by the user and used later to prove (even to third parties) that it has rights granted by the server. The unblinded item does not reveal the identity of the user, even to the original server.

Another variation involves an "identity escrow" to allow revelation of the transacting customer's identity in the event of a subsequent dispute between the customer and the server. This was originally proposed by Brickell et. al. for a version of anonymous electronic cash that would allow discovery of money laundering or other illegal transactions.

Finally, Boneh and Franklin proposed an anonymous authentication system based on "group signatures" in which subscribers can demonstrate their membership in an arbitrary group of authorized users, but still allows key revocation and identity escrow.

The previously mentioned methods all depend on public key cryptography, and require either short-lived certificates or certificate revocation lists, which tend to increase the maintenance cost, computational load, and irritation factor involved in transaction processing.

An improved method for conducting electronic transactions with a potentially untrusted server while maintaining user anonymity and transaction privacy, yet allowing the server to verify the user is a valid subscriber entitled to participate in the transaction is therefore needed.

### Summary of the Invention

It is accordingly an object of this invention to provide a system, method, business method, and computer program product for conducting electronic transactions with a potentially untrusted server while maintaining user anonymity and transaction privacy, yet allowing the server to verify the user is a valid subscriber entitled to participate in the transaction. A user initially registers as a subscriber to a transaction service with a transaction server and is provided with a unique set of device keys for decrypting messages. The user then sends an anonymous transaction request to a transaction server through any known method. The server then transmits an encrypted response to the request that can only be decrypted by registered subscribers.

It is a related object of the invention to provide complete transaction anonymity, including both the transaction request and the response. Anonymous service requests are sent to the server. The server transmits responses that have been encrypted such that only valid subscribers can decrypt them. Broadcast encryption schemes that enable selective revocation of misbehaving subscribers will tip off requestors that the server is trying to identify them. Transaction and content quantity can be monitored for usage-based billing while maintaining anonymity. Each content item may be uniquely encrypted with a content key that is then encrypted by a session key and included in encrypted form with a response, to reduce the computational workload.

The foregoing objects are believed to be satisfied by the embodiments of the present invention as described below.

### Brief Description of the Drawings

- FIG. 1: is a flowchart of the operation of the invention, according to an embodiment of the present invention.
- FIG. 2: is a diagram of the initial registration and device key delivery steps of the invention, according to an embodiment of the present invention.
- FIG. 3: is a diagram of the request and response steps of the invention, according to an embodiment of the present invention.
- FIG. 4: is a diagram of the request and response steps of the invention, according to the preferred embodiment of the present invention.
- FIG. 5: is a diagram of the request and response steps of the invention when an intermediary is employed, according to an embodiment of the invention.

### Detailed Description of the Invention

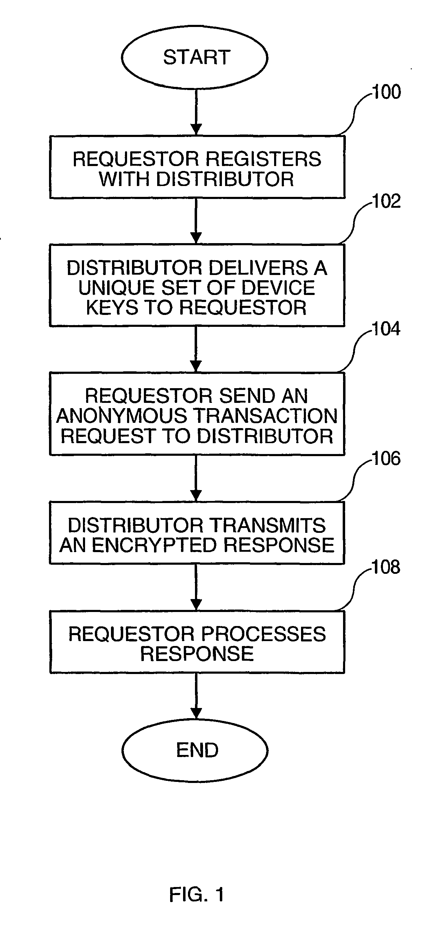

Referring now to FIG. 1, a flowchart of the general operation of the invention is shown. In step 100, a requestor initially registers with a distributor. The distributor may be an actual content server, or may be an intermediary between the requestor and a content server.

Typical content servers include institutions that routinely process transactions where either the identity of a registered requestor or the contents of a particular transaction, or both, could be very sensitive information. Financial firms, companies that maintain digital libraries, and auction houses, are likely to find the present invention to be of particular utility. Commercial institutions may be typical requestors as well. For example, pharmaceutical companies may request services relating to research on a particular disease or gene sequence. Marketing professionals may employ data mining tools to extract useful information from a database. Venture capitalists may investigate a particular company in preparation for investment, or a large stockholder may place a limit order to buy or sell stocks when certain conditions arise. Anonymous transaction processing is not only desirable in these scenarios, but may even be mandated by future legislation.

Content may take any form, including but not limited to electronic computer files as well as conventional physical data storage means such as floppy disks, CD-ROMs, and DVD-ROMs. Content may be distributed by any means, including but not limited to mailing physical media, and sending signals via television, satellite, cable, and computer networks (including via e-mail and various file transfer protocols) as known in the art.

Next, in step 102, the distributor delivers a unique set of device keys to the requestor (or, more typically, to the requestor's receiving device). The device keys are used in various broadcast encryption techniques to calculate a session key block, also called a media key block. Although two devices might have a few device keys in common, no two devices will have exactly the same set of device keys. Given a session key block, a device uses its device keys to process the session key block and calculate another key, called the session key, that is used to decrypt broadcast messages. Every legitimate device calculates the same session key, although they all calculate it in a different way. When an unauthorized device tries to perform the same calculation, it is misled and always ends up with the wrong answer for the session key and is thus selectively prevented from decrypting the broadcast messages. This is called revoking the device.

The distributor also has a session key block it will serve to anyone on demand. The distributor will change the session key block periodically. As subscriptions expire, or if the distributor has evidence that a given registered requestor is misusing his subscription, (for example, by passing on his device keys to third parties), the given requestor is revoked in the session key block. However, when a registered requestor in good standing wants to make a request, he can calculate the current session key. All broadcast encryption schemes and session key block technologies are within the scope of this invention.

In step 104, the requestor sends an anonymous transaction request to the distributor. Any protocol for sending the request can be employed. As long as the distributor cannot determine the requestor's identity, the requestor need not trust the distributor to maintain transaction anonymity. Internet protocols always allow the distributor to know a TCP/IP address for the requestor. This address sometimes identifies the requestor. However, sometimes all the distributor knows, for example, is "this request came from someone in XYZ" where XYZ is a particular ISP, or "this request came from someone behind the ZYX corporation's firewall". TCP/IP anonymizing networks, called MIX networks, are well- known in the art. Such anonymizing networks may handle the transaction request to ensure anonymity.

Many possible cryptographic protocols are within the scope of this invention. For example, the requestor could send a request in the clear, i.e. in unencrypted form, and the distributor would encrypt the subsequent response using the current session key. It is possible to encrypt the request with the session key, and keep the response in the clear, and achieve the same effect. It is possible to encrypt both. It is even possible to encrypt neither, but authenticate the in-the-clear request with a message authentication code (called a MAC in the cryptographic literature) based on the session key.

All these techniques protect the anonymity of the requestor, in that the requestor knows that the distributor will have absolutely no idea who made the request, and need not rely on some purportedly enforceable legal agreement. Techniques that involve encryption also offer protection against eavesdropping. It is also within the scope of this invention to protect against eavesdropping by wrapping the request and response within a standard link- level encryption technique such as SSL.

The requested transaction may include, but is not limited to:
- bidding on, buying, or selling items via auction
- buying or selling stocks, options, commodities, or other securities or merchandise in a financial transaction
- researching a topic of interest, including investigating literature on science, medicine, intellectual property, and historical or legal records
- performing any kind of real estate transaction
- accessing a database.

In step 106, the distributor transmits an encrypted response. Anonymizing networks may also handle transmission of the response (or responses if each request triggers more than one response). The distributor may broadcast the response, using any broadcast encryption scheme. The distributor employs the encryption scheme to ensure that only registered requestors (i.e. paying subscribers to a service) can decrypt the response with a session key that is computed using the device keys that have previously been distributed. As long as the response relating to the transaction can be decrypted only by some member of the set of valid registered requestors, the distributor is assured that the data is not being pirated. The present invention thus protects the anonymity of the requestor while guaranteeing to the distributor that the requestor is either a paid subscriber or will be unable to use the response.

Finally, in step 108, the requestor processes the response. The processing includes decrypting the responses to access the originally encrypted content, but can also include a previous step of selecting particular responses from a potentially very large set of broadcast transmissions. Note that this anonymity works even though the server knows which subscribers have which device keys. In fact, it is useful for the servers to know this information as part of their policing of misuse of the service. But what if the server is trying to "trace" which keys were being used in a given request? All of the aforementioned session key block technologies are capable of this so-called tracing. These techniques operate by test revoking whole classes of requestors, and seeing if a given requestor has been revoked or not. Then, by divide-and-conquer, the tracer can eventually find the particular requestor. While this is happening, however, a requestor will observe many instances when he has been inexplicably revoked. In this invention, these revocations serve as a red flag to the requestor that the distributor is up to no good, and the requestor should discontinue his operations with the distributor if he has any concerns about privacy. The chance that the distributor can guess right all the time, so the requestor never sees an inexplicable revocation, is vanishingly small.

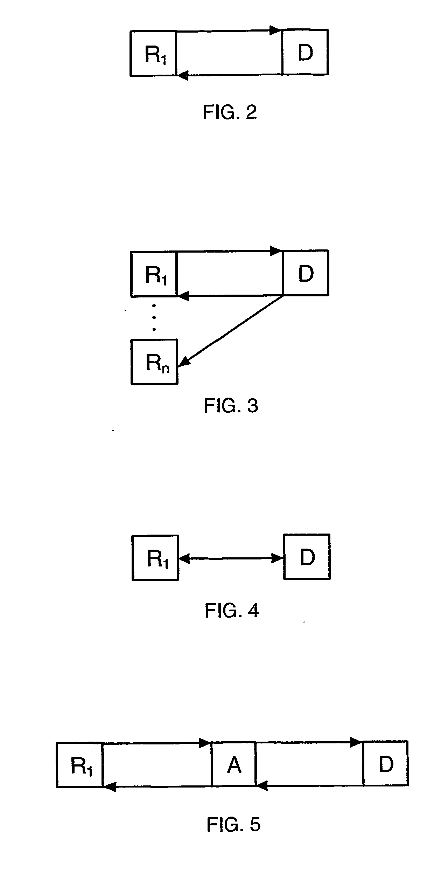

Referring now to FIG. 2, a diagram of the initial registration and device key delivery steps of the invention is shown. The requestor (designated as R₁) registers as a subscriber to a particular service to be provided by (or delivered via) the distributor (designated as D). The distributor delivers (and may itself create) a set of unique device keys to the requestor.

Referring now to FIG. 3, a diagram of the request and response steps of the invention is shown. The requestor sends an anonymous transaction request to the distributor. The distributor then transmits an encrypted response relating to the transaction. The response may be broadcast for reception by all registered requestors **R₁** through **Rn**.

Referring now to FIG. 4, a diagram of the request and response steps of the preferred embodiment of the invention is shown. In this embodiment, a point-to-point connection between the requestor and the distributor is used for communication. This connection does not identify the requestor, i.e. it does not provide information regarding a return address that could be used to attack the requestor's anonymity.

If a distributor processes a lot of anonymous requests and broadcasts a lot of encrypted responses as shown in FIG. 3, each valid requestor is going to get a lot of encrypted messages. So, in the preferred embodiment, each requestor employs a point-to- point connection to the distributor. A normal HTTP Web connection is an example of such an implementation. The distributor probably cannot identify the requestor by his TCP/IP return address in the point-to-point connection. Most people get a certain amount of anonymity based on how they connect: for example, when one connects to the Internet it is typically either through a firewall at work, or through an ISP connection at home. In both cases, the return address that the outside server sees is a very generic company or ISP address that does not identify the requestor individually. MIX networks that guarantee complete anonymity in the return address are known in the art. The preferred embodiment of the invention uses point-to-point connections that provide anonymity in the return address by any available means. With point-to-point connections, a user sees only his responses.

In the preferred implementation, a tool is provided to a standard Web server, such as the IBM WebSphere (R). This tool encrypts content on demand using the DES (Data Encryption Standard) cipher, for example, though all ciphers are within the scope of this invention. The tool can run as a "CGI" program to encrypt dynamic content, or can run in the background and encrypt static content. In either case, the content so encrypted is marked with a special MIME-type, for example "x/SKB-protected". Each requestor's Web browser employs a plug-in that decrypts this content and returns it to the browser, given that the requestor had the proper (non-revoked) device keys for that service.

Referring now to FIG. 5, a diagram of the request and response steps of the invention are shown when an intermediary is employed. In this embodiment, the intermediary is a trusted third party administrator (designated as **A**) that handles some of the transaction processing tasks for a distributor. These tasks may include creating and/or subsequently delivering device keys to requestors, as well as tracking requestor registration information and periodically providing the distributor with a session key block that reflects a current set of registered requestors.

In many cases, the payments the receiver makes to the distributor to become (or remain) a registered subscriber are not linked to the specific quantity of transactions processed, or the amount of content provided. Quite often, a requestor will pay a distributor for unlimited access to a resource for a particular span of time, regardless of the use the requestor makes of the resource. Note that with the present invention, the requestor can pay by credit card for the service subscription, and the distributor will have no way to identify his individual content requests.

In other situations, though, the distributor may establish billing practices that charge the requestor according to the quantity of transactions processed and/or the amount of content in processed transactions. To handle this scenario, the requestor can run tamper- resistant software that tracks transaction usage information that determines billing and disallows cheating. A requestor may not trust such software to maintain anonymity, though. Therefore, it may be necessary for a mutually trusted third party to certify that the software behaves properly, which adds a level of complexity to the basic invention.

Thus, a different solution to the usage-based billing problem, described in this embodiment, is to have the trusted third party administrator perform some billing related tasks, such as tracking transaction data such as transaction quantity and/or transaction size. Thus, the invention can be extended to a scenario where the distributor does not acquire any personal information regarding its subscribers at all, but merely provides services to authorized requestors via the administrator.

It is also within the scope of this invention to reduce the computational workload of preparing responses by encrypting each piece of content with a unique content key. The content key is then encrypted with a current session key and then included, in encrypted form, in the response. This greatly reduces the amount of data that needs to be re-encrypted when the session key block changes (as it does periodically).

The present invention may also be employed as a business method for electronic commerce, where requestors are charged a fee to have their transactions processed anonymously. Alternately, transaction privacy may be offered at no charge by the distributor, to provide a marketing advantage over competitors who do not offer the unique features of the present invention, and to provide requestors with an additional incentive to subscribe. The invention may be extended further to cover the case where there are multiple classes of subscription service. For example, there might be a "gold service" which could access an extended corpus. It is a simple matter to have each class of service be associated with a different session key block.

A general purpose computer is programmed according to the inventive steps herein. The invention can also be embodied as an article of manufacture - a machine component - that is used by a digital processing apparatus to execute the present logic. This invention is realized in a critical machine component that causes a digital processing apparatus to perform the inventive method steps herein. The invention may be embodied by a computer program that is executed by a processor within a computer as a series of computer-executable instructions. These instructions may reside, for example, in RAM of a computer or on a hard drive or optical drive of the computer, or the instructions may be stored on a DASD array, magnetic tape, electronic read-only memory, or other appropriate data storage device.

While the invention has been described with respect to illustrative embodiments thereof, it will be understood that various changes may be made in the apparatus and means herein described without departing from the scope and teaching of the invention. Accordingly, the described embodiment is to be considered merely exemplary and the invention is not to be limited except as specified in the attached claims.

## Claims

1. A method for ensuring that electronic transactions are processed anonymously, comprising:
initially registering a requestor with a potentially non-trusted distributor (100);
delivering a unique set of device keys to said requestor (102), the device keys allowing the requestor to create a session key computed with said device keys, the session key being the same for a plurality of additional requestors being registered with the potentially non-trusted distributor;
sending an anonymous transaction request from said requestor to said distributor (104);
transmitting an encrypted response from said distributor (106) ;
processing said response by said requestor, using said session key (108).

2. The method of claim 1 wherein said distributor is a content server.

3. The method of claim 1 wherein said distributor is an intermediary between said requestor and a content server.

4. The method of any preceding claim wherein said request relates to at least one of: an auction, a financial transaction, a research transaction, a real estate transaction, and access to a database.

5. The method of any preceding claim wherein anonymizing networks perform said sending.

6. The method of any preceding claim wherein anonymizing networks perform said transmitting.

7. The method of any preceding claim wherein said request triggers a plurality of said responses.

8. The method of any preceding claim wherein said response is broadcast and only registered requestors can decrypt said response with a session key computed using said device keys.

9. The method of any preceding claim wherein said processing includes selecting particular responses from a plurality of transmissions.

10. The method of any preceding claim wherein said processing includes decrypting said responses.

11. The method of any preceding claim wherein said requestor determines that requestor anonymity is threatened by detecting revocations resulting from tracing attempts said distributor makes.

12. The method of any preceding claim wherein payments to said distributor by said requestor are not dependent on the transactions processed.

13. The method of any of the claims 1-11 wherein payments to said distributor by said requestor are dependent on the transactions processed.

14. The method of claim 13 wherein tamper-resistant software certified by a mutually trusted third party tracks transaction data.

15. The method of claim 13 or 14 wherein a trusted third party administrator performs at least one of: providing said device keys to said requestors, tracking requestor registration information, and periodically providing a session key block to said distributor reflecting a current set of registered requestors.

16. The method of any preceding claim wherein said requestor and said distributor communicate via a point-to-point connection that does not identify said requestor.

17. The method of any preceding claim wherein said response includes content protected with a unique content key that is encrypted by a current session key and included in encrypted form in said response.

18. A system including means for performing the steps of the method of any claim from 1 to 17.

19. A computer program including computer readable program code means adapted to perform the method of any claim 1 to 17 when said program is run on a data processing system.

20. A computer program product including computer readable medium embodying the computer program of claim 19.

## Patentansprüche

1. Verfahren, das dazu dient sicherzustellen, dass elektronische Transaktionen anonym verarbeitet werden, wobei das Verfahren Folgendes umfasst:
eingangs erfolgendes Anmelden eines Anforderers bei einem möglicherweise nicht vertrauenswürdigen Anbieter (100) ;
Liefern eines eindeutigen Satzes von Einheitenschlüsseln an den Anforderer (102), wobei die Einheitenschlüssel dem Anforderer die Erzeugung eines Sitzungsschlüssels ermöglichen, der mit den Einheitenschlüsseln berechnet wird, wobei der Sitzungsschlüssel bei einer Vielzahl von weiteren Anforderern gleich ist, die bei dem möglicherweise nicht vertrauenswürdigen Anbieter angemeldet sind;
Senden einer anonymen Transaktionsanforderung von dem Anforderer an den Anbieter (104);
Übertragen einer verschlüsselten Antwort von dem Anbieter (106) ;
Verarbeiten der Antwort durch den Anforderer unter Verwendung des Sitzungsschlüssels (108).

2. Verfahren nach Anspruch 1, wobei der Anbieter ein Inhalt-Server ist.

3. Verfahren nach Anspruch 1, wobei der Anbieter ein Vermittler zwischen dem Anforderer und einem Inhalt-Server ist.

4. Verfahren nach einem der vorhergehenden Ansprüche, wobei sich die Anforderung auf mindestens eines von Folgendem bezieht: eine Auktion, eine Finanztransaktion, eine Forschungs-/Analysetransaktion, eine Immobilientransaktion und den Zugriff auf eine Datenbank.

5. Verfahren nach einem der vorhergehenden Ansprüche, wobei anonymisierende Netzwerke den Sendevorgang durchführen.

6. Verfahren nach einem der vorhergehenden Ansprüche, wobei anonymisierende Netzwerke den Übertragungsvorgang durchführen.

7. Verfahren nach einem der vorhergehenden Ansprüche, wobei die Anforderung eine Vielzahl der Antworten auslöst.

8. Verfahren nach einem der vorhergehenden Ansprüche, wobei die Antwort im Rundsendeverfahren übermittelt wird und nur angemeldete Anforderer die Antwort mit einem Sitzungsschlüssel entschlüsseln können, der mit Hilfe der Einheitenschlüssel berechnet wird.

9. Verfahren nach einem der vorhergehenden Ansprüche, wobei das Verarbeiten die Auswahl von bestimmten Antworten aus einer Vielzahl von Übertragungen beinhaltet.

10. Verfahren nach einem der vorhergehenden Ansprüche, wobei das Verarbeiten das Entschlüsseln der Antworten beinhaltet.

11. Verfahren nach einem der vorhergehenden Ansprüche, wobei der Anforderer feststellt, dass die Anonymität des Anforderers bedroht ist, indem er Sperrungen erkennt, die die Folge von Versuchen der Rückverfolgung sind, die der Anbieter unternimmt.

12. Verfahren nach einem der vorhergehenden Ansprüche, wobei Zahlungen an den Anbieter durch den Anforderer nicht von den verarbeiteten Transaktionen abhängen.

13. Verfahren nach einem der Ansprüche 1 bis 11, wobei Zahlungen an den Anbieter durch den Anforderer von den verarbeiteten Transaktionen abhängen.

14. Verfahren nach Anspruch 13, wobei eine missbrauchssichere Software, die von einer dritten Partei, der beiderseitig vertraut wird, Transaktionsdaten verfolgt.

15. Verfahren nach Anspruch 13 oder 14, wobei eine vertrauenswürdige dritte Partei in Form eines Administrators mindestens eines von Folgendem durchführt: Bereitstellen der Einheitenschlüssel für die Anforderer, Verfolgen der Anmeldedaten der Anforderer und in regelmäßigen Abständen Bereitstellen eines Sitzungsschlüsselblocks für den Anbieter, der eine aktuelle Gruppe von angemeldeten Anforderern widerspiegelt.

16. Verfahren nach einem der vorhergehenden Ansprüche, wobei der Anforderer und der Anbieter über eine Punkt-zu-Punkt-Verbindung, die den Anforderer nicht ausweist, Daten austauschen.

17. Verfahren nach einem der vorhergehenden Ansprüche, wobei die Antwort einen Inhalt enthält, der mit einem eindeutigen Inhaltschlüssel geschützt wird, welcher mit einem aktuellen Sitzungsschlüssel verschlüsselt und in verschlüsselter Form in die Antwort aufgenommen wird.

18. System, das ein Mittel enthält, um die Schritte des Verfahrens nach einem der Ansprüche 1 bis 17 durchzuführen.

19. Rechnerprogramm, das ein rechnerlesbares Programmcode-Mittel enthält, das so ausgelegt ist, dass es das Verfahren nach einem der Ansprüche 1 bis 17 durchführt, wenn das Programm auf einem Datenverarbeitungssystem ausgeführt wird.

20. Rechnerprogrammprodukt, das einen rechnerlesbaren Datenträger enthält, der das Rechnerprogramm nach Anspruch 19 enthält.

## Revendications

1. Procédé destiné à assurer que les transactions électroniques sont traitées de manière anonyme, comprenant les étapes consistant à :
enregistrer initialement un demandeur auprès d'un distributeur qui potentiellement n'est pas de confiance (100),
délivrer un ensemble unique de clés de dispositif audit demandeur (102), les clés de dispositif permettant au demandeur de créer une clé de session calculée avec lesdites clés de dispositif, la clé de session étant la même pour une pluralité de demandeurs supplémentaires qui sont enregistrés auprès du distributeur qui potentiellement n'est pas de confiance,
envoyer une demande de transaction anonyme dudit demandeur audit distributeur (104),
transmettre une réponse cryptée depuis ledit distributeur (106),
faire traiter ladite réponse par ledit demandeur, en utilisant ladite clé de session (108).

2. Procédé selon la revendication 1, dans lequel ledit distributeur est un serveur de contenu.

3. Procédé selon la revendication 1, dans lequel ledit distributeur est un intermédiaire entre ledit demandeur et un serveur de contenu.

4. Procédé selon l'une quelconque des revendications précédentes, dans lequel ladite demande se rapporte à au moins l'un de : une mise aux enchères, une transaction financière, une transaction de recherche, une transaction de biens immobiliers et un accès à une base de données.

5. Procédé selon l'une quelconque des revendications précédentes, dans lequel les réseaux rendant anonyme effectuent ledit envoi.

6. Procédé selon l'une quelconque des revendications précédentes, dans lequel les réseaux rendant anonyme effectuent ladite transmission.

7. Procédé selon l'une quelconque des revendications précédentes, dans lequel ladite demande déclenche une pluralité de dites réponses.

8. Procédé selon l'une quelconque des revendications précédentes, dans lequel ladite réponse est diffusée et seuls les demandeurs enregistrés peuvent décrypter ladite réponse avec une clé de session calculée en utilisant lesdites clés de dispositif.

9. Procédé selon l'une quelconque des revendications précédentes, dans lequel ledit traitement comprend la sélection de réponses particulières à partir d'une pluralité de transmissions.

10. Procédé selon l'une quelconque des revendications précédentes, dans lequel ledit traitement comprend le décryptage desdites réponses.

11. Procédé selon l'une quelconque des revendications précédentes, dans lequel ledit demandeur détermine que l'anonymat du demandeur est menacé en détectant des annulations résultant de tentatives de pistage qu'effectue ledit distributeur.

12. Procédé selon l'une quelconque des revendications précédentes, dans lequel les paiements audit distributeur par ledit demandeur ne dépendent pas des transactions traitées.

13. Procédé selon l'une quelconque des revendications 1 à 11, dans lequel les paiements audit distributeur par ledit demandeur dépendent des transactions exécutées.

14. Procédé selon la revendication 13, dans lequel un logiciel résistant à la fraude certifié par une tierce partie mutuellement de confiance suit les données de transaction.

15. Procédé selon la revendication 13 ou 14, dans lequel un administrateur tiers de confiance exécute au moins l'un de : procurer lesdites clés de dispositif auxdits demandeurs, suivre les informations d'enregistrement de demandeurs, et fournir périodiquement un bloc de clés de session audit distributeur reflétant un ensemble en cours de demandeurs enregistrés.

16. Procédé selon l'une quelconque des revendications précédentes, dans lequel ledit demandeur et ledit distributeur communiquent par l'intermédiaire d'une connexion point à point qui n'identifie pas ledit demandeur.

17. Procédé selon l'une quelconque des revendications précédentes, dans lequel ladite réponse comprend un contenu protégé par une clé de contenu unique qui est cryptée par une clé de session en cours et incluse sous une forme cryptée dans ladite réponse.

18. Système comprenant un moyen destiné à exécuter les étapes du procédé selon l'une quelconque des revendications 1 à 17.

19. Programme informatique comprenant un moyen de code de programme lisible par un ordinateur conçu pour exécuter le procédé selon l'une quelconque des revendications 1 à 17 lorsque ledit programme est exécuté sur un système de traitement de données.

20. Produit de programme informatique comprenant un support lisible par un ordinateur incorporant le programme informatique selon la revendication 19.
